# EUROPÄISCHE PATENTANMELDUNG

(11) **EP 2 050 584 A1**
(43) Veröffentlichungstag der Anmeldung: **22.04.2009**
(21) Anmeldenummer: 07020288.2
(22) Anmeldetag: 17.10.2007
(51) Int. Cl.: B60B 33/02

(54) **Bremsrolle**

(71) Anmelder: Haussels, Berthold, 42929 Wermelskirchen (DE)
(72) Erfinder: Haussels, Berthold, 42929 Wermelskirchen (DE)
(74) Vertreter: Füssel, Michael

(57) **Zusammenfassung**

Um bei einer Bremsrolle einen verringerten Betätigungshub des Bremshebels (5) zu erreichen, wird vorgeschlagen, dass der Bremshebel (5) einen in Freigabestellung (10) nach oben gerichteten und mit seinem oberen Ende (20) zum ersten Ende (11) des Druckhebels (12) geneigten Stift (16) aufweist, der mit seiner Mantelfläche (8) auf seinem Weg von der Freigabestellung (10) in die Bremsstellung (9) an der Unterkante (17) eines das Koppelgetriebe (6) zumindest teilweise übergreifenden und mit dem Rollenchassis (1) verbundenen flachen Widerlagerbleches (18) abgleitet und der von dessen flacher Blechunterseite (19) in der Bremsstellung (9) überfangen wird.

## Beschreibung

Die vorliegende Erfindung betrifft eine Bremsrolle nach Oberbegriff des Hauptanspruchs.

Derartige Bremsrollen sind bekannt.

Aufgabe der vorliegenden Erfindung ist es, eine derartige Bremsrolle so weiter zu bilden, dass der Betätigungshub des Bremshebels von der Freigabestellung in die Bremsstellung verkleinert wird.

Diese Aufgabe löst die Erfindung mit den Merkmalen des Hauptanspruchs.

Von wesentlicher Bedeutung ist es, dass durch die Gleitstückpaarung eines linienförmigen Mantelbereichs des Stiftes mit der Unterkante des Widerlagerbleches der Bremshebel und der Druckhebel während der Betätigungsphase von der Freigabestellung, gegebenenfalls über eine mehr oder weniger ausgeprägte Totpunktstellung hinaus, in die Bremsstellung nahezu in gerader Linie zueinander ausgerichtet sind und dies auch bleiben.

Das heißt, dass die Schwenkbewegung des Bremshebels und des Druckhebels während der Betätigungsphase tendenziell um lediglich einen einzigen gemeinsamen Drehpunkt, nämlich um den Lagerungspunkt des einseitig mit dem Rollenchassis angeschlagenen Druckhebels, erfolgt.

Bei bekannten Lösungen würde der drehgelenkig mit dem Druckhebel verbundene Bremshebel aufgrund eines Abgleitens an einem gekröpften Widerlager auch um seine eigene Gelenkverbindung schwenken.

Das wesentliche Prinzip der Erfindung beruht also darauf, die Drehung des Bremshebels um seine drehgelenkige Verbindung mit dem Druckhebel solange zu unterbinden bis die Bremsstellung erreicht ist, um so nur den Hub des Druckhebels als Gesamtbetätigungshub zu erhalten.

Weiterhin ist wesentlich, dass der nach oben gerichtete Stift am Bremshebel mit seinem oberen Ende zum ersten Ende des Druckhebels geneigt ist. Hierdurch wirkt eine entsprechend schräge Reaktionskraft an der Unterkante des Widerlagers, an der der Stift mit seiner Mantelfläche bevorzugt nur an einem kleinen Umfangsbereich seiner Mantellinien anliegt.

Zum einen wirkt durch die schräge Reaktionskraft eine horizontale Kraftkomponente, die aber an der Unterkante bzw. am Drehpunkt des Druckhebels mit dem Rollenchassis abgestützt wird, so dass eine Drehung des Bremshebels um dessen Gelenkverbindung mit dem Druckhebel verhindert wird und zum anderen eine nach unten gerichtete Kraftkomponente entsteht, die den Druckhebel nach unten bewegt.

Das Widerlagerblech ist deshalb flach ausgeführt, um aufgrund der flachen Werkstücktiefe mit Schneideverfahren oder durch Ausstanzen leicht entsprechend scharfe Unterkanten erzeugen zu können. Darüber hinaus bietet ein flaches Widerlagerblech eine flache Blechunterseite, um in der Bremsstellung den Stift überfangen zu können, damit die Bremsstellung gehalten wird, bis der Bremshebel zurückverlagert wird.

Für ein leichtgängiges Abgleiten an der Unterkante wird vorgeschlagen, dass der Stift eine glatte Oberfläche aufweist.

Weiterhin wird vorgeschlagen, dass das nach oben weisende Ende des Stiftes mit einer Fase versehen ist. Durch diese Maßnahme gleitet ein entsprechend dimensionierter Stift beim Erreichen der Bremsstellung mit der Fase an der querliegenden Unterkante des Widerlagerbleches ab und kann somit von der flachen Unterseite des Widerlagerbleches leichtgängig überfangen werden.

Ergänzend hierzu wird vorgeschlagen, dass das nach oben weisende Ende des Stiftes flach ausgeführt ist, so dass der Stift mit der gesamten Fläche seines oberen Endes vom Widerlagerblech unterfangen werden kann.

Für eine leichtgängige Rückführung des Bremshebels aus der Bremsstellung wird vorgeschlagen, dass der Stift in der Bremsstellung nur teilweise vom Widerlagerblech überfangen wird.

Um Abnutzungserscheinungen am Stift aufgrund hoher Schaltzahlen entgegen zu wirken, ist der Stift vorzugsweise gehärtet.

Weiterhin wird vorgeschlagen, dass das Widerlagerblech ausgestanzt wird. Durch diese Maßnahme kann das Widerlagerblech zum einen kostengünstig sowie massenhaft hergestellt werden und zum anderen wird das Widerlagerblech durch Ausstanzverfahren entsprechend kantig.

Um den Hub des Bremshebels aufgrund seiner Länge nicht unnötig zu vergrößern wird vorgeschlagen, dass das Längenverhältnis vom Bremshebel zum Druckhebel in einem Bereich von 1/7 bis 4/7 liegt.

Vorzugsweise liegt das Längenverhältnis vom Bremshebel zum Druckhebel sogar in einem Bereich von 1/7 bis 2/7.

Ein zum Druckhebel derartig kurzer Bremshebel ragt für eine Betätigung im ausreichenden Maße aus dem Rollenchassis heraus, wobei der Hub am Bremshebel tendenziell innerhalb der Höhe des Rollenchassis liegt.

Denkbar wäre, dass zum Beispiel zwei Bremsrollen unter einer Plattform so angeordnet sind, dass ihre Bremshebel für eine Betätigung zwar nach außen weisen, aber parallel zueinander ausgerichtet sind und innerhalb der Umrandungslinie der Plattform liegen. Durch diese Anordnung lassen sich die Bremshebel für eine Betätigung, anstatt mit Bremspedalen, leicht mit einer zum Beispiel geraden Stange verbinden, so dass keine störenden Elemente über die Umrandungslinie der Plattform hinausragen, in der Bremsstellung also erst recht nicht.

Durch die erfindungsgemäße Hubverringerung wird eine derart angebrachte Stange während der Betätigungsphase tendenziell nur innerhalb der Höhe des Rollenchassis bewegt. Dieser Umstand bietet den wesentlichen Vorteil, dass trotz einer derart unterhalb der Plattform angebrachten Gestängekontruktion die Handhabung mit zum Beispiel einem Gabelstapler oder ähnlichem Gerät nicht erschwert wird.

Darüber hinaus können so die Bremshebel gleichartiger Bremsrollen gleichzeitig über die Totpunktstellung in die Bremsstellung gebracht werden, wodurch man den Vorteil einer verbesserten Bremseinwirkung erhält.

Als kostengünstig konstruktive Lösung wird vorgeschlagen, dass der Stift ein Zylinderstift ist, wobei der Zylinderstift mit einem Gewindeende mit Schlitz versehen ist.

Ein derartiger Zylinderstift lässt sich in einer Gewindedurchgangsbohrung von unten leicht nachjustieren.

Ergänzend hierzu wird vorgeschlagen, dass der Bremshebel eine Gewindedurchgangsbohrung aufweist, in die der Zylinderstift einschraubbar ist, wobei die Längsachse der Gewindedurchgangsbohrung so zum ersten Ende des Druckhebels geneigt ist, dass der eingeschraubte Zylinderstift in der Freigabestellung des Bremshebels mit seinem oberen Ende zum ersten Ende des Druckhebels weist.

Durch eine schräge Gewindedurchgangsbohrung wird also der eingeschraubte Zylinderstift erfindungsgemäß ausgerichtet.

Vorzugsweise wird vorgesehen, dass der Bremshebel in Freigabestellung am Widerlagerblech nur an der zur Unterkante gegenüberliegenden Unterkante anliegt und zugleich der Zylinderstift an seiner Unterkante.

Diese konstruktive Lösung macht es möglich, den eingeschraubten Zylinderstift an der Unterkante so justieren zu können, dass Abnutzungserscheinungen am oberen Ende des Zylinderstiftes ausgeglichen werden können, ohne dass in der Freigabestellung der Stift mit seinem Gewinde an der Unterkante anliegt.

Im folgenden wird die Erfindung anhand von Ausführungsbeispielen näher erläutert.

### Es zeigen:

- Fig.1: eine erfindungsgemäße Bremsrolle in Seitenansicht, Freigabestellung
- Fig.1a: die Darstellung gemäß Fig.1 in Ansicht von oben
- Fig.2: das Koppelgetriebe zur Betätigung der Bremse gemäß Fig.1
- Fig.3: eine erfindungsgemäße Laufrolle in Bremssteltung
- Fig.3a: Ansicht gemäß Fig.3 von oben
- Fig.4: Teilansicht des Koppelgetriebes in Freigabestellung in Seitenansicht
- Fig.5a: zwei gleichartige parallel zueinander angeordnete erfindungsgemäße Bremsrollen, getrieblich mit einer Stange an ihren jeweiligen Bremshebeln verbunden und unter einer Plattform montiert
- Fig.5b: Seitenansicht einer z.B. starr oder drehgelenkig mit dem Bremshebel verbundene Stange gemäß Fig.5a
- Fig.5c: Stange gemäß Fig.5a und 5b mit einem U-förmig gekröpften Bereich in Vorderansicht
Sofern im folgenden nichts anderes gesagt ist, gilt die folgende Beschreibung stets für alle Figuren.

Die Figuren zeigen eine Bremsrolle 2.

Die Bremsrolle ist auf einem Rollenchassis 1 montiert.

Sie weist eine Laufrolle 3 auf. Auf dem Umfang der Laufrolle 3 kann ein Bremskörper 4 über ein entsprechendes Koppelgetriebe 6 unter einer vorbestimmten Druckkraft aufgepresst werden.

Das Koppelgetriebe 6 weist einen Bremshebel 5 auf, der mit der Fußspitze betätigt werden kann.

Wird der Bremskörper 4 gegen die Umfangsfläche 7 gedrückt, entsteht eine Bremswirkung.

Zu diesem Zweck wird der Bremskörper 4 über das Koppelgetriebe 6 in Richtung zur Umfangsfläche 7 der Laufrolle 3 bewegt und nach Überschreiten einer in vorbestimmter Position zu erwartenden Totpunktstellung des Bremshebels in der Bremsstellung 9 so lange in Anlage an die Umfangsfläche 7 der Bremsrolle gehalten, bis der Bremshebel 5 aus der Bremsstellung 9 zurück in die Freigabestellung 10 verlagert wird.

Zu diesem Zweck weist das Koppelgetriebe 6 neben dem Bremshebel 5 einen an einem Ende 11 einseitig am Rollenchassis 1 angeschlagenen Druckhebel 12 auf. Der Druckhebel 12 ist mit seinem Ende 11 einseitig schwenkbar am Rollenchassis 1 beweglich und überspannt einen federabgestützten Druckbolzen 13, der von oben auf den Bremskörper 4 drückt, sofern der Druckhebel 12 entsprechend nach unten verlagert wird.

An seinem anderen Ende 14 ist der Druckhebel 12 lediglich mit dem kürzer ausgeführten Bremshebel 5 drehgelenkig verbunden.

Die beiden Drehgelenkachsen des Druckhebels 12 liegen zueinander parallel und horizontal, so dass der Bremshebel 5 und der Druckhebel 12 jeweils zusammen in dieselbe Richtung schwenkbar sind.

Wesentlich ist, dass der Bremshebel 5 einen Stift 16 aufweist, der in der Freigabestellung 10, die der Bremshebel als Endstellung einnehmen kann, nach oben gerichtet und zugleich mit einem oberen Ende 20 zum ersten Ende 11 des Druckhebels 12 geneigt ist.

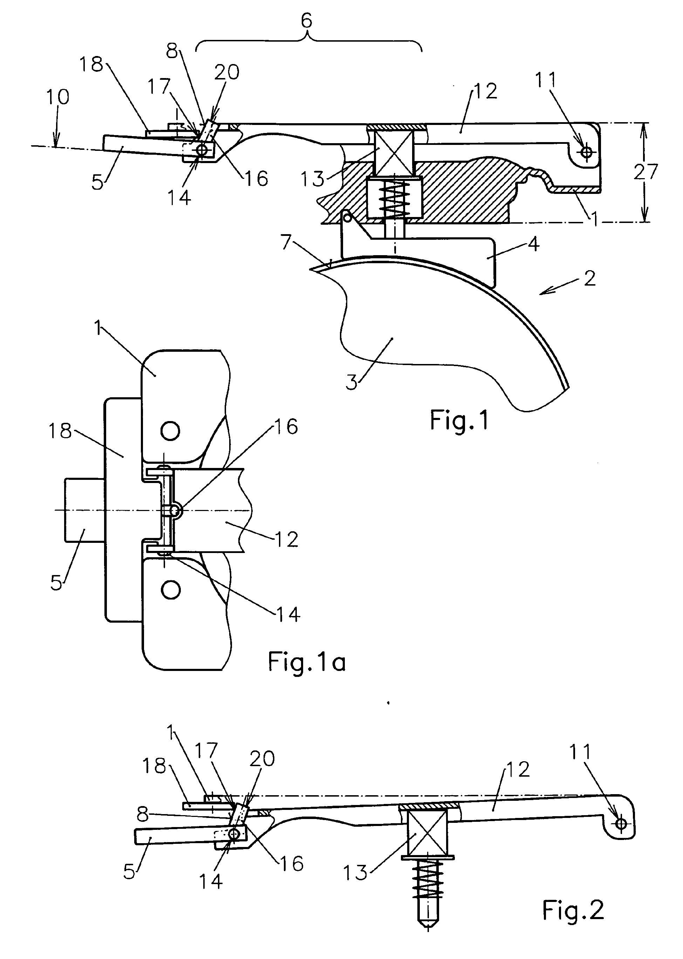

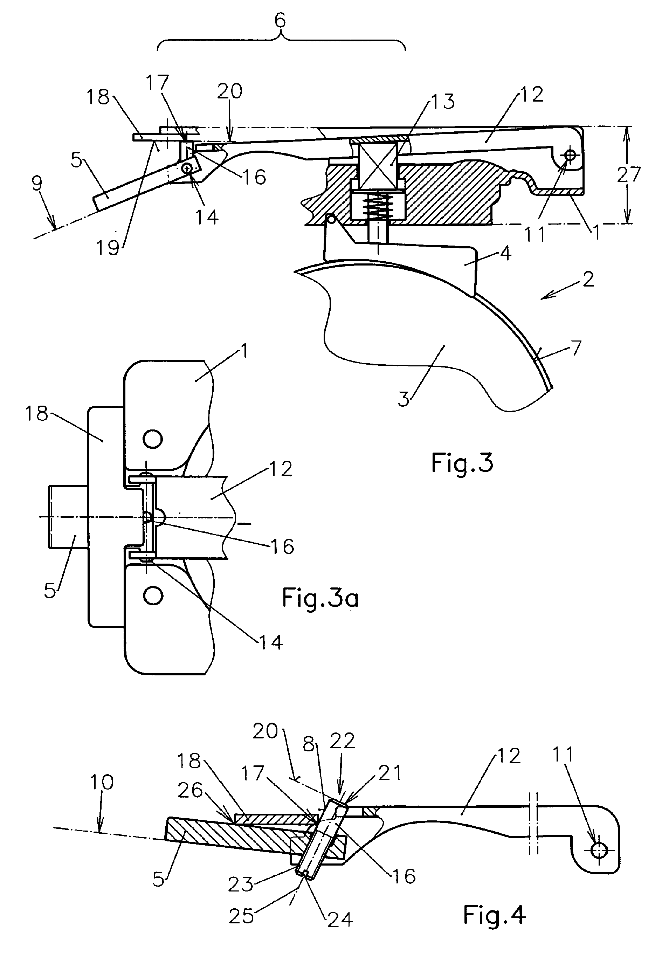

Insbesondere Fig.1 und 4 zeigen diesen Sachverhalt.

Der Stift 16 ist so an dem Bremshebel 5 befestigt, dass er mit seinem oberhalb des Bremshebels 5 befindlichen Teil praktisch nur schräg auf der Unterkante 17 des Widerlagerblechs 18 abzugleiten vermag, sobald der Bremshebel 5 betätigt wird.

Dabei gleitet der Stift 16 mit seiner Mantelfläche 8 auf seinem Weg von der Freigabestellung 10 in die Bremsstellung 9 an der Unterkante 17 des Widerlagerblechs 18 ab, welches das Koppelgetriebe 6 zumindest teilweise übergreift und starr mit dem Rollenchassis 1 verbunden ist.

Das Widerlagerblech 18 ist ein Ausstanzteil aus einem flachen Blech und mit geeigneten Verbindungsmitteln am Rollenchassis 1 befestigt, zum Beispiel mit Nieten.

Es kommt während dieser Bewegung zu einem Kontakt zwischen einer einzigen Mantellinie des Stifts 16 und der quer dazu liegenden Unterkante 17 des Widerlagerblechs 18.

Die dabei auf das Koppelgetriebe 6 wirkenden Kräfte vom Widerlagerblech 18 auf das Koppelgetriebe 6 haben zur Auswirkung, dass infolge der Neigung des Stiftes 16 zum hinteren Ende 11 des Druckhebels 12 eine Zwangsführung für die Kombination aus Bremshebel 5 und Druckhebel 12 entsteht, die nur zusammen entlang der sich ergebenden Führungsflächen bzw. Führungskräfte verschwenkbar sind.

Dies ermöglicht den erfindungsgemäßen kurzen Hub des Bremshebels 5 um den Bremskörper 4 trotzdem mit einer hohen Anpresskraft an die Umfangsfläche 7 der Laufrolle 3 anpressen zu können.

Berücksichtigt man, dass eine derartige Bremsrolle 2 einige 100.000 Lastwechsel überstehen muss, entsteht durch die praktisch stets nur punktförmige Berührung zwischen einer einzigen Mantellinie des Stifts 16 und der querlaufenden Unterkante 17 des Widerlagerblechs 18 zwar eine relativ hohe Flächenpressung, die letztlich naturgemäß auch zu einem gewissen Verschleiß an diesen Kontaktstellen führt.

Dies ist jedoch der Erfindung nicht abträglich, weil nämlich mit zunehmendem Verschleiß zwischen der Mantelfläche des Stifts 16 und der Querkante 17 die jeweils tragenden Kontaktflächen sich einerseits einfahren und andererseits auch vergrößern.

Der Verschleiß wird daher mit zunehmender Anzahl von Lastwechseln überproportional geringer.

Sobald der Bremshebel 5 fast seine Bremsstellung 9 erreicht hat, besteht die Tendenz, dass der Stift 16 mit seinem nach oben weisenden Ende 20 bei weiterer Abwärtsbewegung des Bremshebels 5 unter die Blechunterseite 19 des Widerlagerblechs 18 schlüpfen will.

Eine an seinem oberen Ende angebrachte Fase 21 unterstützt diese Tendenz.

Sobald allerdings der Stift 16 mit seinem oberen Ende 20 unter das Widerlagerblech 18 gerutscht ist, hat der Bremshebel 5 seine Bremsstellung 9 überfangen und der Stift 16 wird von der flachen Blechunterseite 19 zumindest teilweise überfangen.

Zweckmäßigerweise weist der Stift 16 eine glatte Oberfläche auf.

Bevorzugt ist die Oberfläche des Stifts 16 gehärtet, um den Verschleiß am Stift zu mindern.

Wie insbesondere Fig.4 zeigt, kann der Stift 16 an seinem nach oben weisenden Ende 20 mit einer Fase 21 versehen sein.

Die Fase dient dem Zweck, dass der Stift 16 beim Erreichen der Bremsstellung 9 an der Unterkante 17 des Widerlagerblechs verschleißfrei abgleitet und auf diese Weise dem Bremshebel 5 ermöglicht, seine Bremsstellung 9 zu erreichen.

Dabei sollte die obere Kopffläche des Stifts möglichst flach ausgebildet sein und so zur Längsmittellinie des Stifts liegen, dass in der Bremsstellung 9 möglichst eine flächige Berührung zwischen dem Kopfende des Stifts 16 und der unteren Seite 19 des Widerlagerblechs 18 erfolgt.

Da durch die Erfindung insbesondere auch der Hub zum Betätigen des Bremshebels 5 nur sehr gering sein muss, wird ergänzend vorgeschlagen, die Längenverhältnisse von Bremshebel 5 zu Druckhebel 12 in einem Bereich von 1/7 bis 4/7, vorzugsweise in einem Bereich von 1/7 bis 2/7 vorzusehen.

Andere Verhältnisse sind durchaus möglich, solange das gesamte Konzept der Erfindung nicht verlassen wird.

In dem gezeigten Ausführungsbeispiel ist der Stift 16 von geradzylindrischer Außenkontur, das heißt er ist als Zylinderstift 22 ausgeführt.

Mit einem derartigen Zylinderstift lässt sich eine einfache Befestigung an dem Bremshebel 5 realisieren.

Zu diesem Zweck ist der Zylinderstift 22 an einem Ende, seinem Gewindeende 23 mit einem Gewinde versehen und dort zugleich auch mit einer Angriffsfläche für einen Schraubendreher, zum Beispiel einem Schlitz 24.

Zur Befestigung des Stifts 16 benötigt daher der Bremshebel 5 eine Gewindedurchgangsbohrung 25, in welche der Zylinderstift 22 mit seinem Gewinde 23 einschraubbar ist.

Die Längsachse der Durchgangsbohrung 25 ist so zum ersten Ende 11 des Druckhebels 12 geneigt, dass der eingeschraubte Zylinderstift 22 mit seinem oberen Ende im Sinne der Erfindung zum ersten Ende 11 des Druckhebels 12 weist.

Dies gilt für alle möglichen Winkelpositionen, die das Koppelgetriebe 6 zwischen der Freigabestellung 10 und einer Position kurz vor Erreichen der Bremsstellung 9, während der Stift 16 noch mit seiner Mantelfläche auf der Unterkante 17 aufgleitet, einnehmen kann.

Darüber hinaus zeigt insbesondere Fig.4, dass der Bremshebel 5 in seiner Freigabestellung 10 am Widerlagerblech 18 nur an der zur Unterkante 17 gegenüberliegenden Unterkante 26 anliegt, während zugleich der Zylinderstift 22 an der ihm zugeordneten Unterkante 17.

Damit erfüllt das Widerlagerblech 18 auch die Funktion, die Schwenkbewegung des Koppelgetriebes 6 nach oben zu begrenzen, wobei darüber hinaus in dieser Position eine leichte Einstellmöglichkeit für den Stift 16 bei einem etwaig auftretenden Verschleiß ermöglicht ist.

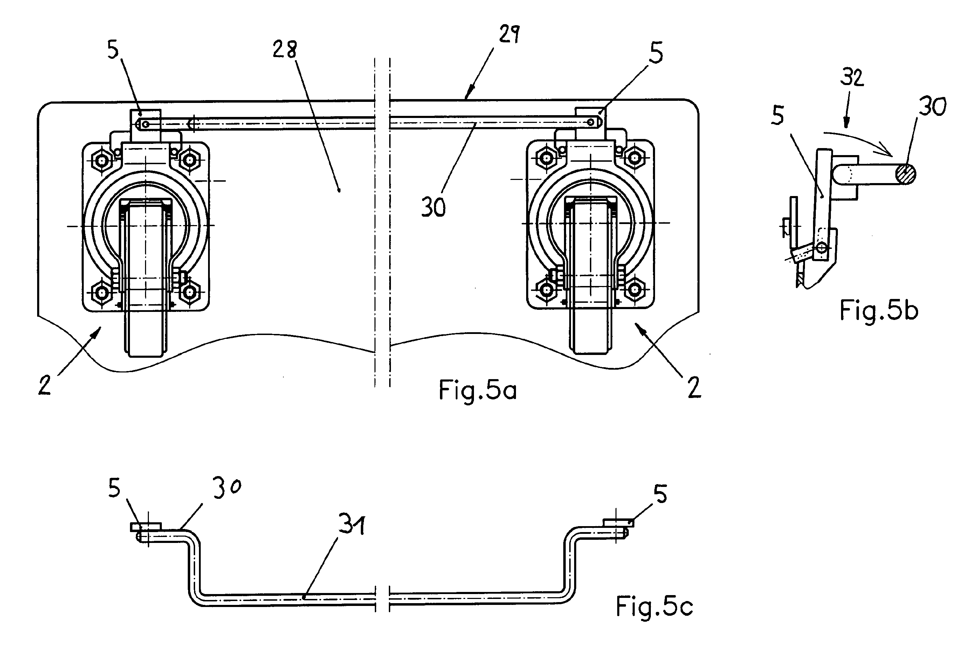

Fig.5a zeigt zwei unter einer Plattform 28 montierte gleichartige und erfindungsgemäße Bremsrollen 2. Die Bremshebel 5 der Bremsrollen 2 weisen nach außen, sind hier zueinander parallel ausgerichtet und liegen innerhalb der Umrandungslinie 29 der Plattform 28. Durch die gezeigte Anordnung ist es möglich die Bremshebel 5 zur Betätigung, anstatt mit Bremspedalen, wie hier z.B. mit einer gekröpften Stange 30 getrieblich zu verbinden, so dass keine störenden Elemente über die Umrandungslinie 29 herausragen.

Durch die erfindungsgemäße Hubverringerung wird die Stange 30 während der Betätigungsphase tendenziell nur innerhalb der Höhe 27 des Rollenchassis 1 bewegt, wodurch die Handhabung mit zum Beispiel einem Gabelstapler oder ähnlichem Gerät nicht erschwert wird.

Durch eine drehgelenkige Verbindung 32, dargestellt in Fig.5b, der Stange 30 mit den jeweiligen Bremshebeln 5 wird dieser Sachverhalt weiter unterstützt, insbesondere bei einer gekröpften Stange 30.

Ergänzend hierzu zeigt Fig.5c eine Stange 30, welche hier vorzugsweise einen U-förmig gekröpften Bereich 31 aufweist. Diese konstruktive Form unterstützt eine vorteilhafte Fußbetätigung.

### Bezugszeichenliste

- 1: Rollenchassis
- 2: Bremsrolle
- 3: Laufrolle
- 4: Bremskörper
- 5: Bremshebel
- 6: Koppelgetriebe
- 7: Umfangsfläche
- 8: Mantelfläche
- 9: Bremsstellung
- 10: Freigabestellung
- 11: am Rollenchassis angeschlagenes Ende des Druckhebels
- 12: Druckhebel
- 13: Druckbolzen
- 14: am Betätigungshebel drehgelenkig verbundenes Ende des Druckhebels
- 16: Stift
- 17: Unterkante
- 18: Widerlagerblech
- 19: Blechunterseite
- 20: nach oben weisendes Ende des Stiftes
- 21: Fase
- 22: Zylinderstift
- 23: Gewindeende
- 24: Schlitz
- 25: Gewindedurchgangsbohrung
- 26: zur Unterkante 17 gegenüberliegende Unterkante
- 27: Höhe des Rollenchassis
- 28: Plattform
- 29: Umrandungslinie
- 30: Stange
- 31: U-förmig gekröpfter Bereich
- 32: drehgelenkige Verbindung

## Patentansprüche

1. Auf einem Rollenchassis (1) montierte Bremsrolle (2) mit einer Laufrolle (3) und einem Bremskörper (4), der von einem Bremshebel (5) über ein Koppelgetriebe (6) in Richtung zur Umfangsfläche (7) der Laufrolle (3) bewegt und nach Überschreiten der Totpunktstellung des Bremshebels (5) in seiner Bremsstellung (9) so lange in Anlage an die Umfangsfläche (7) gehalten wird, bis der Bremshebel (5) aus der Bremsstellung (9) rückwärts über die Totpunktstellung in die Freigabestellung (10) zurückverlagert wird, wobei das Koppelgetriebe (6) neben dem Bremshebel (5) einen an einem Ende (11) einseitig am Rollenchassis (1) angeschlagenen Druckhebel (12) aufweist, der einen zentral gelegenen und federabgestützten Druckbolzen (13) überspannt, der an seinem anderen Ende (14) lediglich mit dem kürzer ausgeführten Bremshebel (5) drehgelenkig verbunden ist, **dadurch gekennzeichnet, dass** der Bremshebel (5) einen in Freigabestellung (10) nach oben gerichteten und mit seinem oberen Ende (20) zum ersten Ende (11) des Druckhebels (12) geneigten Stift (16) aufweist, der mit seiner Mantelfläche (8) auf seinem Weg von der Freigabestellung (10) in die Bremsstellung (9) an der Unterkante (17) eines das Koppelgetriebe (6) zumindest teilweise übergreifenden und mit dem Rollenchassis (1) verbundenen flachen Widerlagerbleches (18) abgleitet und der von dessen flacher Blechunterseite (19) in der Bremsstellung (9) überfangen wird.

2. Bremsrolle (2) nach Anspruch 1, **dadurch gekennzeichnet, dass** der Stift (16) eine glatte Oberfläche aufweist.

3. Bremsrolle (2) nach einem der Ansprüche 1 bis 2, **dadurch gekennzeichnet, dass** das nach oben weisende Ende (20) des Stiftes (16) mit einer Fase (21) versehen ist.

4. Bremsrolle (2) nach Anspruch 3, **dadurch gekennzeichnet, dass** der Stift (16) beim Erreichen der Bremsstellung (9) mit der Fase (21) an der Unterkante (17) des Widerlagerbleches (18) abgleitet.

5. Bremsrolle (2) nach einem der Ansprüche 1 bis 3, **dadurch gekennzeichnet, dass** das nach oben weisende Ende (20) des Stiftes (16) flach ausgeführt ist.

6. Bremsrolle (2) nach einem der Ansprüche 1 bis 5, **dadurch gekennzeichnet, dass** der Stift (16) in der Bremsstellung (9) nur teilweise vom Widerlagerblech (18) überfangen wird.

7. Bremsrolle (2) nach einem der Ansprüche 1 bis 6, **dadurch gekennzeichnet, dass** der Stift (16) gehärtet ist.

8. Bremsrolle (2) nach einem der Ansprüche 1 bis 7, **dadurch gekennzeichnet, dass** das Widerlagerblech (18) ausgestanzt wird.

9. Bremsrolle (2) nach einem der Ansprüche 1 bis 8, **dadurch gekennzeichnet, dass** das Längenverhältnis vom Bremshebel (5) zum Druckhebel (12) in einem Bereich von 1/7 bis 4/7 liegt.

10. Bremsrolle (2) nach einem der Ansprüche 1 bis 9, **dadurch gekennzeichnet, dass** das Längenverhältnis vom Bremshebel (5) zum Druckhebel (12) in einem Bereich von 1/7 bis 2/7 liegt.

11. Bremsrolle (2) nach einem der Ansprüche 1 bis 10, **dadurch gekennzeichnet, dass** der Stift (16) ein Zylinderstift (22) ist.

12. Bremsrolle (2) nach Anspruch 11, **dadurch gekennzeichnet, dass** der Zylinderstift (22) mit einem Gewindeende (23) mit Schlitz (24) versehen ist.

13. Bremsrolle (2) nach Anspruch 12, **dadurch gekennzeichnet, dass** der Bremshebel (5) eine Gewindedurchgangsbohrung (25) aufweist, in die der Zylinderstift (22) einschraubbar ist, wobei die Längsachse der Gewindedurchgangsbohrung (25) so zum ersten Ende (11) des Druckhebels (12) geneigt ist, dass der eingeschraubte Zylinderstift (22) mit seinem oberen Ende zum ersten Ende (11) des Druckhebels (12) weist.

14. Bremsrolle (2) nach Anspruch 13, **dadurch gekennzeichnet, dass** der Bremshebel (5) in Freigabestellung (10) am Widerlagerblech (18) nur an der zur Unterkante (17) gegenüberliegenden Unterkante (26) anliegt und zugleich der Zylinderstift (22) an seiner Unterkante (17).

15. Bremsrolle (2) nach einem der Ansprüche 1 bis 14, **dadurch gekennzeichnet, dass** zwei Bremsrollen (2) unter einer Plattform (28) so angeordnet sind, dass ihre Bremshebel (5) nach außen weisen, parallel zueinander ausgerichtet sind und innerhalb der Umrandungslinie (29) der Plattform (28) liegen.

16. Bremsrolle (2) nach Anspruch 15, **dadurch gekennzeichnet, dass** die Bremshebel (5) mit einer Stange (30) getrieblich verbunden sind.

17. Bremsrolle (2) nach Anspruch 16, **dadurch gekennzeichnet, dass** die Stange mit den Bremshebeln (5) drehgelenkig oder starr verbunden ist.

18. Bremsrolle (2) nach Anspruch 17, **dadurch gekennzeichnet, dass** die Stange zwei vorzugsweise U-förmig gekröpfte Bereiche (31) aufweist.
